# EUROPÄISCHE PATENTSCHRIFT

(11) **EP 3 412 484 B1**
(45) Veröffentlichungstag und Bekanntmachung des Hinweises auf die Patenterteilung: **11.11.2020**
(21) Anmeldenummer: 18168673.4
(22) Anmeldetag: 23.04.2018
(51) Int. Cl.: B60K 5/12, B60K 1/00

(54) **AGGREGATLAGERUNG FÜR EIN KRAFTFAHRZEUG**
SUPPORT ARRANGEMENT FOR AN AGGREGATE OF A VEHICLE
ARRANGEMENT DE SOUTIEN D'AGRÉGAT POUR UN VÉHICULE AUTOMOBILE

(30) Priorität: 06.06.2017 DE 102017209475
(43) Veröffentlichungstag der Anmeldung: 12.12.2018
(73) Patentinhaber: AUDI AG, 85045 Ingolstadt (DE)
(72) Erfinder: Vogel, Friedemann, 85139 Wettstetten (DE)

(56) Entgegenhaltungen:
- EP-A1- 0 615 877
- WO-A1-2004/080733
- DE-A1- 3 342 820
- DE-A1-102011 079 111
- DE-A1-102013 222 778
- DE-U1-202016 102 237

## Beschreibung

Die Erfindung betrifft eine Aggregatanordnung für ein Kraftfahrzeug, mit einem Antriebsaggregat, das über wenigstens ein erstes Festlager unmittelbar an einem Trägerelement gelagert ist, wobei eine Tragstruktur einerseits über ein zweites Festlager und ein von dem zweiten Festlager beabstandetes drittes Festlager an dem Antriebsaggregat angreift und andererseits über ein viertes Festlager an dem Trägerelement angelenkt ist, wobei die Tragstruktur einen ersten Stablenker und einen zweiten Stablenker aufweist, wobei der erste Stablenker einerseits über das zweite Festlager an dem Antriebsaggregat und andererseits über das vierte Festlager an dem Trägerelement angelenkt ist.

Die Aggregatanordnung dient vorzugsweise dem Antreiben des Kraftfahrzeugs, insoweit also dem Bereitstellen eines auf das Antreiben des Fahrzeugs gerichteten Drehmoments. Das Antriebsaggregat liegt insoweit als Traktionsmaschine des Kraftfahrzeugs vor. Die Aggregatanordnung verfügt zum Bereitstellen des Drehmoments über das Antriebsaggregat, welches grundsätzlich beliebig ausgestaltet sein kann. Beispielsweise liegt das Antriebsaggregat in Form einer elektrischen Maschine, insbesondere eines Elektromotors, vor. Das Antriebsaggregat ist über das wenigstens eine erste Festlager unmittelbar an dem Trägerelement gelagert. Das Trägerelement wiederum ist an einer Karosserie, einem Fahrgestell, einem Aggregateträger oder dergleichen angeordnet und befestigt oder stellt einen Teil eines der genannten Elemente dar. Das Trägerelement liegt insoweit beispielsweise in Form des Aggregateträgers, eines Bereichs der Karosserie oder eines Bereichs des Fahrgestells vor.

Das erste Festlager ist an dem Trägerelement ortsfest befestigt. Das Antriebsaggregat ist über das erste Festlager an dem Trägerelement gelagert, insbesondere um eine Drehachse des ersten Festlagers drehbar gelagert. Es kann vorgesehen sein, dass das Antriebsaggregat über genau ein erstes Festlager an dem Trägerelement gelagert ist. Selbstredend ist jedoch auch die Verwendung mehrerer erster Festlager möglich, in welchem Fall das Antriebsaggregat über mehrere, vorzugsweise jeweils voneinander beabstandete erste Festlager unmittelbar an dem Trägerelement gelagert ist. Die ersten Festlager sind dabei nebeneinander angeordnet, insbesondere fallen ihre Drehachsen in einer gemeinsamen Drehachse zusammen.

Weil eine derartige Lagerung des Antriebsaggregats an dem Trägerelement aufgrund der Verwendung eines Festlagers kein Drehmoment aufnehmen kann, ist es notwendig, das Antriebsaggregat zusätzlich bezüglich des Trägerelements abzustützen. Hierzu kann beispielsweise eine Pendelstütze vorgesehen sein, die einerseits an dem Antriebsaggregat und andererseits an dem Trägerelement angreift. Bei einer derartigen Ausgestaltung kann jedoch lediglich eine kleine Abstützbasis realisiert werden, sodass auf das wenigstens eine erste Festlager sowie die Pendelstütze große Kräfte wirken.

Aus dem Stand der Technik ist die Druckschrift DE 102 44 361 A1 bekannt. Diese zeigt eine Vorrichtung zur Schwingungsdämpfung bei einem Fahrzeug, wobei ein Fahrschemel mit Lagern für eine zu lagernde Komponente, vorzugsweise ein Motoraggregat, vorgesehen ist. Es sind Mittel vorgesehen, welche den Abstand zwischen Fahrschemel und einem Lager eines Feder-Dämpferbeins fixieren oder begrenzen, wobei der Fahrschemel an ein Lager des Feder-Dämpferbeins im Wesentlichen starr angebunden ist. Dazu wird eine Strebe zwischen Fahrschemel und einem Lager des Feder-Dämpferbeins oder einem Lager eines Dämpfers angebunden.

Weiterhin ist aus dem Stand der Technik die Druckschrift EP 0 615 877 A1 bekannt. Diese betrifft ein Kraftfahrzeug mit einer Antriebsaggregatlagerung. Zur Vermeidung von Karosserietorsionsschwingungen wird das Antriebsaggregat als Tilger herangezogen, das in besonderer Weise über drei Lager im Fahrzeugaufbau gehalten ist, wobei die Lager eine hohe Eigenfrequenz der Aggregatrollmode bestimmende und genau auf die Karosserietorsion abgestimmte Kennung mit geringer Vertikal-Lagersteifigkeit aufweisen.

Es ist Aufgabe der Erfindung, eine Aggregatanordnung für ein Kraftfahrzeug vorzuschlagen, welche gegenüber bekannten Aggregatanordnungen Vorteile aufweist, insbesondere eine große Abstützbasis mit direkt an dem Antriebsaggregat angreifenden Elementen realisiert, sodass gegenüber den bekannten Aggregatanordnungen deutliche Gewichtsvorteile und/oder Bauraumvorteile realisiert sind.

Dies wird erfindungsgemäß mit einer Aggregatanordnung für ein Kraftfahrzeug mit den Merkmalen des Anspruchs 1 erreicht. Dabei ist vorgesehen, dass der zweite Stablenker einerseits über das dritte Festlager an dem Antriebsaggregat angreift und andererseits über das vierte Festlager an dem Trägerelement angelenkt ist.

Grundsätzlich ist vorgesehen, dass eine Tragstruktur einerseits über ein zweites Festlager und ein von dem zweiten Festlager beabstandetes drittes Festlager an dem Antriebsaggregat angreift und andererseits über ein viertes Festlager an dem Trägerelement angelenkt ist.

Über die Tragstruktur ist das Antriebsaggregat lediglich mittelbar an dem Trägerelement gelagert. Die Tragstruktur greift über zwei Festlager, nämlich das zweite Festlager und das dritte Festlager, an dem Antriebsaggregat an.

Das bedeutet, dass das zweite Festlager und das dritte Festlager jeweils starr mit dem Antriebsaggregat verbunden sind. Das zweite Festlager und das dritte Festlager binden die Tragstruktur jeweils um eine jeweilige Drehachse des Festlagers drehbar an dem Antriebsaggregat an. Aufgrund der voneinander beabstandeten Anordnung des zweiten Festlagers und des dritten Festlagers an dem Antriebsaggregat wird jedoch bereits eine deutliche Versteifung erzielt, insbesondere vor dem Hintergrund, dass die Tragstruktur auf ihrer dem zweiten Festlager und dem dritten Festlager abgewandten Seite über das vierte Festlager an dem Trägerelement angelenkt ist.

In anderen Worten greift also die Tragstruktur einerseits über zwei voneinander beabstandete Festlager, nämlich das zweite Festlager und das dritte Festlager, an dem Antriebsaggregat an, wohingegen es auf ihrer dem Antriebsaggregat abgewandten Seite über eine geringere Anzahl an Festlagern, nämlich vorzugsweise genau ein einziges Festlager, an dem Trägerelement angreift. Das vierte Festlager ist analog zu dem ersten Festlager starr mit dem Trägerelement verbunden. Über das vierte Festlager ist die Tragstruktur über eine Drehachse drehbar an dem Trägerelement gelagert.

Aufgrund des Anbindens der Tragstruktur an das Antriebsaggregat und das Trägerelement über mindestens drei Festlager, nämlich das zweite Festlager, das dritte Festlager und das vierte Festlager, wird bei gleichzeitig kleiner Abstützbasis eine hohe Steifigkeit der Aggregatanordnung und mithin ein zuverlässiges Halten des Antriebsaggregats bezüglich des Trägerelements erzielt.

Die an dem Antriebsaggregat angreifenden Festlager, also das wenigstens eine erste Festlager, das zweite Festlager und das dritte Festlager, sind vorzugsweise in Umfangsrichtung bezüglich einer Längsmittelachse des Antriebsaggregats und/oder einer Drehachse einer Antriebswelle des Antriebsaggregats, verteilt angeordnet, liegen also in Umfangsrichtung beabstandet voneinander vor. Die Festlager sind derart angeordnet, dass über das wenigstens eine erste Festlager ein Großteil des Gewichts des Antriebsaggregats in das Trägerelement eingeleitet wird, nämlich insbesondere ein größerer Anteil des Gewichts als über das vierte Festlager.

Beispielsweise liegt das erste Festlager auf einer ersten Seite einer gedachten Ebene, welche die Längsmittelachse beziehungsweise die Drehachse in sich aufnimmt, wohingegen die Tragstruktur oder zumindest das vierte Festlager auf einer der ersten Seite gegenüberliegenden zweiten Seite der Ebene angeordnet ist. Bevorzugt kann es vorgesehen sein, dass das erste Festlager auf der ersten Seite der gedachten Ebene angeordnet ist, wohingegen sowohl das zweite Festlager als auch das dritte Festlager auf der zweiten Seite angeordnet sind. Zusätzlich können in diesem Fall das vierte Festlager und die Tragstruktur ebenfalls auf der zweiten Seite vorliegen.

Bezogen auf die Längsmittelachse beziehungsweise die Drehachse beträgt der Abstand in Umfangsrichtung zwischen dem wenigstens einen ersten Festlager einerseits und dem zweiten Festlager oder dem dritten Festlager andererseits wenigstens 30°, wenigstens 45° oder wenigstens 60°. Besonders bevorzugt ist eine Anordnung, bei welcher das erste Festlager, das zweite Festlager und das dritte Festlager gleichmäßig über den Umfang des Antriebsaggregats verteilt angeordnet sind, wiederum bezogen auf die Längsmittelachse beziehungsweise die Drehachse.

Mit der beschriebenen Aggregatanordnung kann die Tragstruktur vergleichsweise klein ausfallen, insbesondere hinsichtlich des Abstands zwischen dem zweiten Festlager und/oder dem dritten Festlager einerseits und dem vierten Festlager andererseits. Entsprechend werden ausgeprägte dynamische Schwingungsamplituden, wie sie bei größeren Trägerelementen, insbesondere bei größeren Abständen zwischen dem zweiten Festlager beziehungsweise dem dritten Festlager und dem vierten Festlager auftreten können, vermieden. Zum einen wird also der auftretende Körperschall vermieden. Zum anderen wird der Bauraumbedarf der Aggregatanordnung aufgrund der vergleichsweise kleinen Ausgestaltung der Tragstruktur deutlich verringert.

Die Erfindung sieht vor, dass die Tragstruktur einen ersten Stablenker und einen zweiten Stablenker aufweist. Die Tragstruktur ist insoweit nicht als massives Bauteil ausgeführt, sondern verfügt vielmehr über mehrere, separat voneinander ausgestaltete Elemente, nämlich beispielsweise zumindest den ersten Stablenker und den zweiten Stablenker. Die beiden Stablenker sind wenigstens bereichsweise beabstandet voneinander angeordnet. Eine derartige Ausgestaltung der Tragstruktur weist ein äußerst geringes Gewicht im Vergleich mit einem massiven Bauteil auf.

Weiterhin ist vorgesehen, dass der erste Stablenker einerseits über das zweite Festlager an dem Antriebsaggregat angreift und andererseits über das vierte Festlager an dem Trägerelement angelenkt ist. Auf einer ersten Seite ist der erste Stablenker also drehbar an dem Antriebsaggregat angelenkt, nämlich über das zweite Festlager. Auf einer der ersten Seite gegenüberliegenden Seite ist er drehbar an dem Trägerelement gelagert, nämlich über das vierte Festlager.

Die Erfindung sieht vor, dass der zweite Stablenker einerseits über das dritte Festlager an dem Antriebsaggregat angreift und andererseits über das vierte Festlager an dem Trägerelement angelenkt ist. Für den zweiten Stablenker gilt insoweit bevorzugt dasselbe wie für den ersten Stablenker, mit dem Unterschied, dass er über das dritte Festlager anstelle des zweiten Festlagers an dem Antriebsaggregat angreift. Auf die vorstehenden Ausführungen hinsichtlich des ersten Stablenkers wird insoweit für den zweiten Stablenker vollumfänglich Bezug genommen.

Es wird deutlich, dass die beiden Stablenker, also der erste Stablenker und der zweite Stablenker, beabstandet voneinander an dem Antriebsaggregat angreifen, nämlich der erste Stablenker über das zweite Festlager und der zweite Stablenker über das dritte Festlager. Andererseits sind sie jedoch gemeinsam über das vierte Festlager an dem Trägerelement angelenkt und insoweit gemeinsam an dem Trägerelement gelagert. Beispielsweise sind die beiden Stablenker auf ihrer dem vierten Festlager zugewandten Seite miteinander verbunden, insbesondere starr aneinander befestigt. Die beschriebene Ausgestaltung weist eine besonders hohe Steifigkeit auf.

Eine Weiterbildung der Erfindung sieht vor, dass der erste Stablenker und der zweite Stablenker unabhängig voneinander mit dem vierten Festlager verbunden sind oder auf ihrer dem vierten Festlager zugewandten Seite miteinander verbunden sind und gemeinsam an dem vierten Festlager angreifen.

Grundsätzlich sind insoweit zwei unterschiedliche Ausführungsformen der Aggregatanordnung realisierbar. In der ersten sind die beiden Stablenker auch auf ihrer dem vierten Festlager zugewandten Seite gegeneinander verlagerbar, insbesondere um die Drehachse des vierten Festlagers gegeneinander verdrehbar. Die beiden Stablenker greifen in diesem Fall unabhängig voneinander an dem vierten Festlager an und sind insoweit mittels des vierten Festlagers zwar gemeinsam, jedoch unabhängig voneinander an dem Trägerelement angelenkt.

Alternativ kann es in einer zweiten Ausführungsform vorgesehen sein, dass die beiden Stablenker auf ihrer dem vierten Festlager zugewandten Seite miteinander verbunden sind, nämlich vorzugsweise starr. Die Verbindung der beiden Stablenker kann dabei beispielsweise formschlüssig, kraftschlüssig und/oder stoffschlüssig erfolgen. In letzterem Fall sind die beiden Stablenker beispielsweise miteinander verschweißt.

Eine weitere bevorzugte Ausgestaltung der Erfindung sieht vor, dass der erste Stablenker in wenigstens einem zwischen dem zweiten Festlager und dem vierten Festlager liegenden Bereich von dem zweiten Stablenker entkoppelt ist, und/oder dass der zweite Stablenker in wenigstens einem zwischen dem dritten Festlager und dem vierten Festlager liegenden Bereich von dem ersten Stablenker entkoppelt ist. Hierunter ist zu verstehen, dass die beiden Stablenker jeweils einen Bereich aufweisen, der von dem jeweils anderen Stablenker beabstandet angeordnet ist, also nicht mit diesem in Bürokontakt steht oder an ihm befestigt ist. Der Bereich des ersten Stablenkers liegt entlang seiner Längserstreckung zwischen dem zweiten Festlager und dem vierten Festlager, wohingegen der Bereich des zweiten Stablenkers entlang seiner Längserstreckung zwischen dem dritten Festlager und dem vierten Festlager liegt.

Der erste Stablenker und/oder der zweite Stablenker können jeweils mehrere dieser Bereiche aufweisen, welche von dem jemals anderen Stablenker entkoppelt sind, wohingegen sie zwischen diesen Bereichen miteinander verbunden sind, beispielsweise über wenigstens eine Strebe, die von dem ersten Stablenker bis hin zu dem zweiten Stablenker verläuft beziehungsweise umgekehrt.

Eine Weiterbildung der Erfindung sieht vor, dass an einem zwischen dem zweiten Festlager und dem vierten Festlager liegenden weiteren Bereich des ersten Stablenkers wenigstens eine mit dem zweiten Stablenker verbundene Strebe und/oder eine mit dem zweiten Stablenker verbundene weitere Strebe angreift. Vorstehend wurde bereits darauf hingewiesen, dass die beiden Stablenker jeweils Bereiche aufweisen, in welchen sie voneinander entkoppelt beziehungsweise voneinander beabstandet sind. Der erste Stablenker kann nun jedoch den weiteren Bereich aufweisen, in welchem genau eine solche Kopplung vorgesehen ist. Beispielsweise liegt der weitere Bereich zwischen zwei der vorstehend genannten Bereiche, insbesondere schließen sich diese beidseitig unmittelbar an den weiteren Bereich an.

In dem weiteren Bereich des ersten Stablenkers greifen die Strebe und/oder die weitere Strebe an ihm an. Die Strebe und/oder die weitere Strebe sind auf ihrem dem ersten Stablenker abgewandten Ende mit dem zweiten Stablenker verbunden. Vorzugsweise greift die Strebe beziehungsweise die weitere Strebe einerseits starr an dem ersten Stablenker und andererseits starr an dem zweiten Stablenker an, koppelt diese also starr miteinander. Beispielsweise sind die Strebe und/oder die weitere Strebe einerseits formschlüssig, kraftschlüssig und/oder stoffschlüssig mit dem ersten Stablenker und andererseits formschlüssig, kraftschlüssig und/oder stoffschlüssig mit dem zweiten Stablenker verbunden.

Eine bevorzugte Weiterbildung der Erfindung sieht vor, dass die Strebe und die weitere Strebe beabstandet voneinander an dem ersten Stablenker angreifen und gemeinsam mit dem zweiten Stablenker verbunden sind. Insoweit ist mittels der beiden Stablenker und den beiden Streben, nämlich der Strebe und der weiteren Strebe, eine Fachwerkstruktur der Tragstruktur realisiert. Die beiden Streben greifen beabstandet voneinander an dem ersten Stablenker an, jedoch an derselben Stelle oder zumindest nahezu derselben Stelle des zweiten Stablenkers. Beispielsweise sind also die beiden Streben auf ihrer dem zweiten Stablenker zugewandten Seite unmittelbar miteinander verbunden.

Eine weitere Ausgestaltung der Erfindung sieht vor, dass das erste Festlager, das zweite Festlager, das dritte Festlager und das vierte Festlager jeweils als Elastomerlager ausgestaltet sind. Insoweit kann das erste Festlager als erstes Elastomerlager, das zweite Festlager als zweites Elastomerlager, das dritte Festlager als drittes Elastomerlager und das vierte Festlager als viertes Elastomerlager bezeichnet werden. Die Elastomerlager sind beispielsweise jeweils derart ausgestaltet, dass ein Dämpfungskörper des Elastomerlagers von einem Befestigungselement zentral durchgriffen ist. Der Dämpfungskörper umgreift anders ausgedrückt das Befestigungselement in Umfangsrichtung vollständig.

Es ist nun vorgesehen, dass die aneinander jeweils zu lagernden Elemente ausschließlich über das Dämpfungselement miteinander gekoppelt sind. Im Falle des ersten Festlagers ist also das Antriebsaggregat ausschließlich über das Dämpfungselement des ersten Festlagers mit dem Trägerelement verbunden, im Falle des zweiten Festlagers und des dritten Festlagers ist die Tragstruktur ausschließlich über die Dämpfungskörper der beiden Festlager mit dem Antriebsaggregat verbunden und im Falle des vierten Festlagers ist die Tragstruktur ausschließlich über das Dämpfungselement des vierten Festlagers an dem Trägerelement angelenkt. Das Dämpfungselement ist jeweils schwingungsdämpfend ausgestaltet, sodass mittels der Elastomerlager eine Schwingungsdämpfung zwischen den aneinander gelagerten Elementen realisiert ist.

Schließlich kann im Rahmen einer weiteren bevorzugten Ausführungsform der Erfindung vorgesehen sein, dass das zweite Festlager und das dritte Festlager jeweils eine höhere Steifigkeit aufweisen als das erste Festlager und/oder das vierte Festlager. Dies ist insbesondere im Falle der Ausgestaltung der Festlager als Elastomerlager vorgesehen. Das erste Festlager trägt den Hauptanteil des Gewichts des Antriebsaggregats und ist bezüglich seiner Steifigkeit optimal für die Isolation von Körperschall ausgelegt. Das zweite und das dritte Festlager sind hingegen steifer beziehungsweise härter als das erste Festlager, insbesondere ist ihre Steifigkeit um wenigstens 25 %, wenigstens 50 %, wenigstens 75 % oder wenigstens 100 % höher. Vorzugsweise verfügen das zweite Festlager und das dritte Festlager über dieselbe Steifigkeit.

Die Anbindung der Tragstruktur an das Antriebsaggregat über das zweite Festlager und das dritte Festlager ist insoweit vergleichsweise steif. Um den Eintrag von Körperschall von dem Antriebsaggregat in die Tragstruktur zu vermeiden, ist nun das vierte Festlager, über welches die Tragstruktur an dem Trägerelement angelenkt ist, wiederum vergleichsweise weich ausgelegt. Es weist insoweit bevorzugt eine geringere Steifigkeit auf als das zweite Festlager und das dritte Festlager.

Die Erfindung betrifft selbstverständlich zudem ein Kraftfahrzeug mit einer Aggregatanordnung, insbesondere einer Aggregatanordnung gemäß den vorstehenden Ausführungen, wobei die Aggregatanordnung ein Antriebsaggregat aufweist, das über wenigstens ein erstes Festlager unmittelbar an einem Trägerelement gelagert ist. Dabei ist vorgesehen, dass eine Tragstruktur einerseits über ein zweites Festlager und ein von dem zweiten Festlager beabstandetes drittes Festlager an dem Antriebsaggregat angreift und andererseits über ein viertes Festlager an dem Trägerelement angelenkt ist.

Auf die Vorteile einer derartigen Ausgestaltung der Aggregatanordnung beziehungsweise des Kraftfahrzeugs wurde bereits hingewiesen. Sowohl das Kraftfahrzeug als auch die Aggregatanordnung können gemäß den vorstehenden Ausführungen weitergebildet sein, sodass insoweit auf diese verwiesen wird.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung einer Aggregatanordnung in einer ersten Ausführungsform und Ansicht, sowie
- Figur 2: die Aggregatanordnung in einer schematischen Darstellung in einer zweiten Ausführungsform und Ansicht.

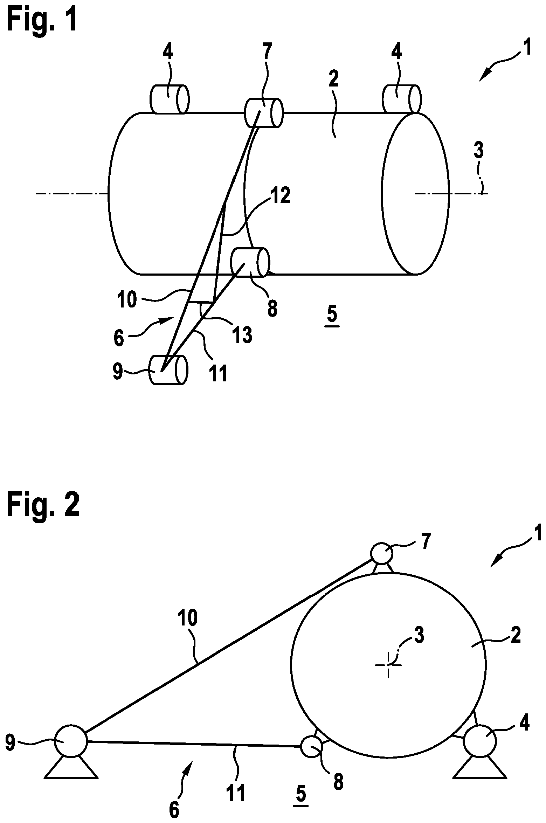

Die Figur 1 zeigt eine schematische Darstellung einer Aggregatanordnung 1 für ein Kraftfahrzeug in einer ersten Ausführungsform. Die Aggregatanordnung 1 verfügt über ein Antriebsaggregat 2, das beispielsweise als elektrische Maschine ausgestaltet ist. Das Antriebsaggregat 2 weist beispielsweise eine Längsmittelachse 3 auf. Alternativ kann die Längsmittelachse 3 in Form einer Drehachse einer Antriebswelle des Antriebsaggregats 2 vorliegen. Das Antriebsaggregat 2 ist über wenigstens ein erstes Festlager 4 an einem hier nicht näher dargestellten Trägerelement 5 gelagert, insbesondere drehbar gelagert. In dem hier dargestellten Ausführungsbeispiel sind mehrere erste Festlager 4, nämlich genau zwei erste Festlager 4 vorgesehen, welche in axialer Richtung bezüglich der Längsmittelachse 3 voneinander beabstandet an dem Antriebsaggregat 2 angreifen.

Zusätzlich ist das Antriebsaggregat 2 über eine Tragstruktur 6 an das Trägerelement 5 angebunden. Die Tragstruktur 6 greift einerseits über ein zweites Festlager 7 und ein drittes Festlager 8 an dem Antriebsaggregat 2 an. Die beiden Festlager 7 und 8 sind in Umfangsrichtung bezüglich der Längsmittelachse 3 voneinander beabstandet angeordnet beziehungsweise greifen beabstandet voneinander an dem Antriebsaggregat 2 an. In dem hier dargestellten Ausführungsbeispiel sind das zweite Festlager 7 und das dritte Festlager 8 in axialer Richtung mittig zwischen den beiden ersten Festlagern 4 angeordnet. Ist lediglich ein erstes Festlager 4 vorgesehen, so ist dieses vorzugsweise an derselben axialen Position angeordnet wie das zweite Festlager 7 und das dritte Festlager 8.

Auf ihrer dem zweiten Festlager 7 und dem dritten Festlager 8 abgewandten Seite ist die Tragstruktur 6 über ein viertes Festlager 9 an dem Trägerelement 5 angelenkt. Die Anbindung der Tragstruktur 6 mittels des zweiten Festlagers 7, mittels des dritten Festlagers 8 und mittels des vierten Festlagers 9 ist vorzugsweise jeweils drehbar ausgestaltet. Aufgrund der voneinander beabstandeten Anordnung des zweiten Festlagers 7 und des dritten Festlagers 8 an dem Antriebsaggregat 2 in Umfangsrichtung wird jedoch eine Drehbewegung der Tragstruktur 6 bezüglich des Antriebsaggregats 2 und des Trägerelements 5 weitgehend unterbunden.

Es ist erkennbar, dass die Tragstruktur 6 einen ersten Stablenker 10 sowie einen zweiten Stablenker 11 aufweist. Die beiden Stablenker 10 und 11 greifen separat voneinander an dem Antriebsaggregat 2 an, nämlich der erste Stablenker 10 über das zweite Festlager 7 und der zweite Stablenker 11 über das dritte Festlager 8. Hingegen sind sie auf ihren dem Antriebsaggregat 2 abgewandten Seiten gemeinsam über das vierte Festlager 9 an dem Trägerelement 5 angelenkt. Die beiden Stablenker 10 und 11 sind größtenteils beabstandet voneinander angeordnet, insbesondere nimmt der Abstand ausgehend von dem vierten Stablenker 9 in Richtung des Antriebsaggregats 2 stetig zu. Vorzugsweise sind die beiden Stablenker 10 und 11 jeweils gerade, insbesondere durchgehend gerade ausgestaltet. Vorzugsweise berühren sie sich lediglich auf ihren dem vierten Festlager 9 zugewandten Seite beziehungsweise im Bereich des vierten Festlagers 9.

Die beiden Stablenker 10 und 11 sind in dem hier dargestellten Ausführungsbeispiel über eine Strebe 12 sowie eine weitere Strebe 13 miteinander verbunden. Die Streben 12 und 13 greifen beabstandet voneinander an dem ersten Stablenker 10 an, wohingegen sie gemeinsam an dem zweiten Stablenker 11 angreifen, insbesondere also an derselben Stelle des zweiten Stablenkers 11. Vorzugsweise sind die beiden Streben 12 und 13 jeweils starr sowohl mit dem ersten Stablenker 10 als auch dem zweiten Stablenker 11 verbunden, vorzugsweise stoffschlüssig. Beide Streben 12 und 13 verlaufen vorzugsweise jeweils gerade, nämlich insbesondere durchgehend gerade.

Die Festlager der Aggregatanordnung 1, genauer also das erste Festlager 4, das zweite Festlager 7, das dritte Festlager 8 sowie das vierte Festlager 9, sind jeweils als Elastomerlager ausgestaltet. Hierbei weisen das zweite Festlager 7 und das dritte Festlager 8 jeweils eine höhere Steifigkeit auf als entweder das erste Festlager 4, das vierte Festlager 9 oder beide. Bevorzugt weisen hingegen das zweite Festlager 7 und das dritte Festlager 8 dieselbe Steifigkeit auf.

Die Figur 2 zeigt eine zweite Ausgestaltung der Aggregatanordnung 1 in einer anderen Ansicht. Grundsätzlich wird auf die vorstehenden Ausführungen Bezug genommen und nachfolgend lediglich auf die Unterschiede eingegangen. Diese liegen darin, dass das erste Festlager 4 beziehungsweise die ersten Festlager 4 in Umfangsrichtung bezüglich des Antriebsaggregats 2 an einer anderen Stelle angeordnet sind. Im Rahmen des zweiten Ausführungsbeispiels greifen das erste Festlager 4 und das vierte Festlager 9 vorzugsweise an einer ebenen Fläche des Trägerelements 5 an. Auch andere Ausgestaltungen des Trägerelements 5 können jedoch realisiert sein. Zudem entfallen in dem hier dargestellten Ausführungsbeispiel die vorstehend beschriebenen Streben 12 und 13. Optional können sie jedoch selbstverständlich ebenfalls vorgesehen sein.

Mit der im Rahmen dieser Beschreibung erläuterten Aggregatanordnung 1 ist eine Aufhängung des Antriebsaggregats 2 bezüglich des Trägerelements 5 möglich, bei welcher eine hervorragende Schwingungsdämpfung bei gleichzeitig geringem Gewicht und/oder Bauraumbedarf realisiert ist. Dies wird insbesondere durch vergleichsweise dünne Stablenker 10 und 11 realisiert, welche lediglich einen Bruchteil des Gewichts des Antriebsaggregats 2 tragen müssen und zur Aufnahme eines Drehmoments des Antriebsaggregats 2 um die Längsmittelachse 3 beziehungsweise Drehachse 3 ausgestaltet sind.

## Patentansprüche

1. Aggregatanordnung (1) für ein Kraftfahrzeug, mit einem Antriebsaggregat (2), das über wenigstens ein erstes Festlager (4) unmittelbar an einem Trägerelement (5) gelagert ist, wobei eine Tragstruktur (6) einerseits über ein zweites Festlager (7) und ein von dem zweiten Festlager (7) beabstandetes drittes Festlager (8) an dem Antriebsaggregat (2) angreift und andererseits über ein viertes Festlager (9) an dem Trägerelement (5) angelenkt ist, wobei die Tragstruktur (6) einen ersten Stablenker (10) und einen zweiten Stablenker (11) aufweist, wobei der erste Stablenker (10) einerseits über das zweite Festlager (7) an dem Antriebsaggregat (2) angreift und andererseits über das vierte Festlager (9) an dem Trägerelement (5) angelenkt ist **dadurch gekennzeichnet, dass** der zweite Stablenker (11) einerseits über das dritte Festlager (8) an dem Antriebsaggregat (2) angreift und andererseits über das vierte Festlager (9) an dem Trägerelement (5) angelenkt ist.

2. Aggregatanordnung nach einem der vorhergehenden Ansprüche, **dadurch gekennzeichnet, dass** der erste Stablenker (10) und der zweite Stablenker (11) unabhängig voneinander mit dem vierten Festlager (9) verbunden sind oder auf ihrer dem vierten Festlager (9) zugewandten Seite miteinander verbunden sind und gemeinsam an dem vierten Festlager (9) angreifen.

3. Aggregatanordnung nach einem der vorhergehenden Ansprüche, **dadurch gekennzeichnet, dass** der erste Stablenker (10) in wenigstens einem zwischen dem zweiten Festlager (7) und dem vierten Festlager (9) liegenden Bereich von dem zweiten Stablenker (11) entkoppelt ist, und/oder dass der zweite Stablenker (11) in wenigstens einem zwischen dem dritten Festlager (8) und dem vierten Festlager (9) liegenden Bereich von dem ersten Stablenker (10) entkoppelt ist.

4. Aggregatanordnung nach einem der vorhergehenden Ansprüche, **dadurch gekennzeichnet, dass** an einem zwischen dem zweiten Festlager (7) und dem vierten Festlager (9) liegenden weiteren Bereich des ersten Stablenkers (10) wenigstens eine mit dem zweiten Stablenker (11) verbundene Strebe (12) und/oder eine mit dem zweiten Stablenker (11) verbundene weitere Strebe (13) angreift.

5. Aggregatanordnung nach Anspruch 4, **dadurch gekennzeichnet, dass** die Strebe (12) und die weitere Strebe (13) beabstandet voneinander an dem ersten Stablenker (10) angreifen und gemeinsam mit dem zweiten Stablenker (11) verbunden sind.

6. Aggregatanordnung nach einem der vorhergehenden Ansprüche, **dadurch gekennzeichnet, dass** das erste Festlager (4), das zweite Festlager (7), das dritte Festlager (8) und das vierte Festlager (9) jeweils als Elastomerlager ausgestaltet sind.

7. Aggregatanordnung nach einem der vorhergehenden Ansprüche, **dadurch gekennzeichnet, dass** das zweite Festlager (7) und das dritte Festlager (8) jeweils eine höhere Steifigkeit aufweisen als das erste Festlager (4) und/oder das vierte Festlager (9).

## Claims

1. Aggregate arrangement (1) for a motor vehicle having a drive aggregate (2) which is supported via at least one fixed bearing (4) directly on a carrier element (5), wherein a support structure (6) on the one side engages, via a second fixed bearing (7) and a third fixed bearing (8) spaced from the second fixed bearing (7), on the drive aggregate (2) and on the other side is articulated via a fourth fixed bearing (9) on the carrier element (5), wherein the support structure (6) has a first bar-shaped strut (10) and a second bar-shaped strut (11), wherein the first bar-shaped strut (10) on the one side engages via the second fixed bearing (7) on the drive aggregate (2) and on the other side is articulated via the fourth fixed bearing (9) on the carrier element (5), **characterised in that** the second bar-shaped strut (11) engages on the one side via the third fixed bearing (8) on the drive aggregate (2) and on the other side is articulated via the fourth fixed bearing (9) on the carrier element (5).

2. Aggregate arrangement according to any of the preceding claims, **characterised in that** the first bar-shaped strut (10) and the second bar-shaped strut (11) are connected independently of one another with the fourth fixed bearing (9) or are connected with one another on their side facing the fourth fixed bearing (9) and together engage on the fourth fixed bearing (9).

3. Aggregate arrangement according to any of the preceding claims, **characterised in that** the first bar-shaped strut (10) is decoupled from the second bar-shaped strut (11) in at least one region situated between the second fixed bearing (7) and the fourth fixed bearing (9) and/or that the second bar-shaped strut (11) is decoupled from the first bar-shaped strut (10) in at least one region situated between the third fixed bearing (8) and the fourth fixed bearing (9).

4. Aggregate arrangement according to any of the preceding claims, **characterised in that** at least one strut (12) connected with the second bar-shaped strut (11) and/or one further strut (13) connected with the second bar-shaped strut (11) engages on a further region of the first bar-shaped strut (10) situated between the second fixed bearing (7) and the fourth fixed bearing (9).

5. Aggregate arrangement according to claim 4, **characterised in that** the strut (12) and the further strut (13) engage on the first bar-shaped strut (10) spaced from one another and are connected in a shared manner with the second bar-shaped strut (11).

6. Aggregate arrangement according to any of the preceding claims, **characterised in that** the first fixed bearing (4), the second fixed bearing (7), the third fixed bearing (8) and the fourth fixed bearing (9) are in each case in the form of elastomer bearings.

7. Aggregate arrangement according to any of the preceding claims, **characterised in that** the second fixed bearing (7) and the third fixed bearing (8) have in each case a higher rigidity than the first fixed bearing (4) and/or the fourth fixed bearing (9).

## Revendications

1. Ensemble de groupe (1) pour un véhicule automobile, avec un groupe d'entraînement (2), qui est logé par le biais d'au moins un premier palier fixe (4) directement sur un élément porteur (5), dans lequel une structure de support (6) s'engage d'un côté par le biais d'un deuxième palier fixe (7) et d'un troisième palier fixe (8) espacé du deuxième palier fixe (7) avec le groupe d'entraînement (2) et est articulé de l'autre côté par le biais d'un quatrième palier fixe (9) sur l'élément porteur (5), dans lequel la structure de support (6) présente un premier bras tige (10) et un deuxième bras tige (11), dans lequel le premier bras tige (10) s'engage d'un côté par le biais du deuxième palier fixe (7) avec le groupe d'entraînement (2) et est articulé de l'autre côté par le biais du quatrième palier fixe (9) sur l'élément porteur (5), **caractérisé en ce que** le deuxième bras tige (11) s'engage d'un côté par le biais du troisième palier fixe (8) avec le groupe d'entraînement (2) et est articulé de l'autre côté par le biais du quatrième palier fixe (9) sur l'élément porteur (5).

2. Ensemble de groupe selon l'une quelconque des revendications précédentes, **caractérisé en ce que** le premier bras tige (10) et le deuxième bras tige (11) sont reliés indépendamment l'un de l'autre au quatrième palier fixe (9) ou sont reliés l'un à l'autre sur leur côté tourné vers le quatrième palier fixe (9) et s'engagent ensemble sur le quatrième palier fixe (9).

3. Ensemble de groupe selon l'une quelconque des revendications précédentes, **caractérisé en ce que** le premier bras tige (10) est découplé du deuxième bras tige (11) dans au moins une zone située entre le deuxième palier fixe (7) et le quatrième palier fixe (9), et/ou que le deuxième bras tige (11) est découplé du premier bras tige (10) dans au moins une zone située entre le troisième palier fixe (8) et le quatrième palier fixe (9).

4. Ensemble de groupe selon l'une quelconque des revendications précédentes, **caractérisé en ce qu'**au moins une barre (12) reliée au deuxième bras tige (11) et/ou une autre barre (13) reliée au deuxième bras tige (11) s'engage avec une autre zone du premier bras tige (10) située entre le deuxième palier fixe (7) et le quatrième palier fixe (9).

5. Ensemble de groupe selon la revendication 4, **caractérisé en ce que** la barre (12) et l'autre barre (13) s'engagent espacées l'une de l'autre avec le premier bras tige (10) et sont reliées ensemble au deuxième bras tige (11).

6. Ensemble de groupe selon l'une quelconque des revendications précédentes, **caractérisé en ce que** le premier palier fixe (4), le deuxième palier fixe (7), le troisième palier fixe (8) et le quatrième palier fixe (9) sont configurés respectivement en tant que palier élastomère.

7. Ensemble de groupe selon l'une quelconque des revendications précédentes, **caractérisé en ce que** le deuxième palier fixe (7) et le troisième palier fixe (8) présentent respectivement une plus grande rigidité que le premier palier fixe (4) et/ou le quatrième palier fixe (9).
